(19) Europäisches Patentamt
European Patent Office
Office européen des brevets

(11) **EP 4 187 310 A1**

(12) **EUROPEAN PATENT APPLICATION**
published in accordance with Art. 153(4) EPC

(43) Date of publication:
**31.05.2023 Bulletin 2023/22**

(21) Application number: **21846379.2**

(22) Date of filing: **15.07.2021**

(51) International Patent Classification (IPC):
**G02B 30/30** $^{(2020.01)}$ **G02B 27/01** $^{(2006.01)}$

(52) Cooperative Patent Classification (CPC):
**G02B 27/01; G02B 30/30**

(86) International application number:
**PCT/JP2021/026664**

(87) International publication number:
**WO 2022/019215 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.07.2020 JP 2020125729**
**18.03.2021 JP 2021045097**

(71) Applicant: **Kyocera Corporation**
**Kyoto-shi Kyoto 612-8501 (JP)**

(72) Inventors:
• **KUSAFUKA, Kaoru**
**Kyoto-shi, Kyoto 612-8501 (JP)**
• **SATOU, Akinori**
**Kyoto-shi, Kyoto 612-8501 (JP)**

(74) Representative: **TBK**
**Bavariaring 4-6**
**80336 München (DE)**

(54) **THREE-DIMENSIONAL DISPLAY DEVICE, HEAD-UP DISPLAY, AND MOBILE OBJECT**

(57) A 3D display device includes a display panel, a barrier, a detector, and a controller. The display panel displays a parallax image including a first image and a second image having parallax with respect to the first image. The barrier defines a traveling direction of image light of the parallax image to generate parallax between first and second eyes of a user. The detector captures an image of a face of the user viewing the parallax image. The controller generates a first reference image by combining the first and second images different from each other based on an index defining an arrangement of the first and second images to be displayed on the display panel, causes the display panel to display the first reference image, and adjusts the index based on the image of the face of the user captured by the detector onto which the reference image is projected.

FIG. 1

EP 4 187 310 A1

## Description

TECHNICAL FIELD

The present disclosure relates to a three-dimensional (3D) display device, a head-up display, and a movable body.

BACKGROUND OF INVENTION

A known technique is described in, for example, Patent Literature 1.

CITATION LIST

PATENT LITERATURE

Patent Literature 1: Japanese Unexamined Patent Application Publication No. 2001-166259

SUMMARY

In one embodiment of the present disclosure, a three-dimensional display device includes a display panel, a barrier, a detector, and a controller. The display panel displays a parallax image including a first image and a second image having parallax with respect to the first image. The barrier defines a traveling direction of image light of the parallax image to generate parallax between a first eye and a second eye of a user. The detector captures an image of a face of the user viewing the parallax image. The controller generates a first reference image by combining the first image and the second image different from each other based on an index defining an arrangement of the first image and the second image to be displayed on the display panel, and causes the display panel to display the first reference image. The controller adjusts the index based on the image of the face of the user captured by the detector onto which the reference image is projected.

In one embodiment of the present disclosure, a head-up display includes a display panel, a barrier, an optical member, a detector, and a controller. The display panel displays a parallax image including a first image and a second image having parallax with respect to the first image. The barrier defines a traveling direction of image light of the parallax image to generate parallax between a first eye and a second eye of a user. The optical member allows the image light emitted from the display panel to be viewable to the user as a virtual image. The detector captures an image of a face of the user viewing the parallax image. The controller generates a first reference image by combining the first image and the second image different from each other based on an index defining an arrangement of the first image and the second image to be displayed on the display panel, and causes the display panel to display the first reference image. The controller adjusts the index based on the image of the face of the user captured by the detector onto which the reference image is projected.

In one embodiment of the present disclosure, a movable body includes a head-up display. The head-up display includes a display panel, a barrier, an optical member, a detector, and a controller. The display panel displays a parallax image including a first image and a second image having parallax with respect to the first image. The barrier defines a traveling direction of image light of the parallax image to generate parallax between a first eye and a second eye of a user. The optical member allows the image light emitted from the display panel to be viewable to the user as a virtual image. The detector captures an image of a face of the user viewing the parallax image. The controller generates a first reference image by combining the first image and the second image different from each other based on an index defining an arrangement of the first image and the second image to be displayed on the display panel, and causes the display panel to display the first reference image. The controller adjusts the index based on the image of the face of the user captured by the detector onto which the reference image is projected.

BRIEF DESCRIPTION OF THE DRAWINGS

The objects, features, and advantages of the present disclosure will become more apparent from the following detailed description and the drawings.

FIG. 1 is a diagram of a 3D display device according to an embodiment of the present disclosure viewed in a vertical direction.
FIG. 2 is a diagram of a display panel in the 3D display device illustrated in FIG. 1 viewed in a depth direction.
FIG. 3 is a diagram of a barrier in the 3D display device illustrated in FIG. 1 viewed in the depth direction.
FIG. 4 is a diagram describing left viewable sections on the display panel in the 3D display device illustrated in FIG. 1.
FIG. 5 is a diagram describing right viewable sections on the display panel in the 3D display device illustrated in FIG. 1.
FIG. 6 is a diagram describing information for identifying the position of a left eye and the position of a right eye.
FIG. 7 is an example image table showing, with an interocular distance being a reference distance, the positions of the left eye and the right eye, and the corresponding images to be displayed by subpixels.
FIG. 8 is a diagram of an example reference image used for index adjustment.
FIG. 9 is a diagram of an example image of a user captured by a detector onto which the reference image is projected.
FIG. 10 is a table describing origin correction.

FIG. 11 is a flowchart of an example process for index adjustment.

FIG. 12 is a diagram describing binocular viewable sections in a 3D display system illustrated in FIG. 1.

FIG. 13 is a diagram of an example image of the user captured by the detector onto which the reference image is projected.

FIG. 14 is a diagram describing a process for interocular distance correction.

FIG. 15 is a diagram of a head-up display according to an embodiment of the present disclosure.

FIG. 16 is a diagram of a movable body according to an embodiment of the present disclosure.

DESCRIPTION OF EMBODIMENTS

As a three-dimensional (3D) display device with the structure that forms the basis of a 3D display device according to one or more embodiments of the present disclosure, a known 3D display device for enabling glasses-free 3D image viewing includes an optical element that directs a part of light from a display panel to reach a right eye and another part of the light to reach a left eye.

One or more embodiments of the present disclosure will now be described with reference to the drawings. The drawings used herein are schematic and are not drawn to scale relative to the actual size of each component.

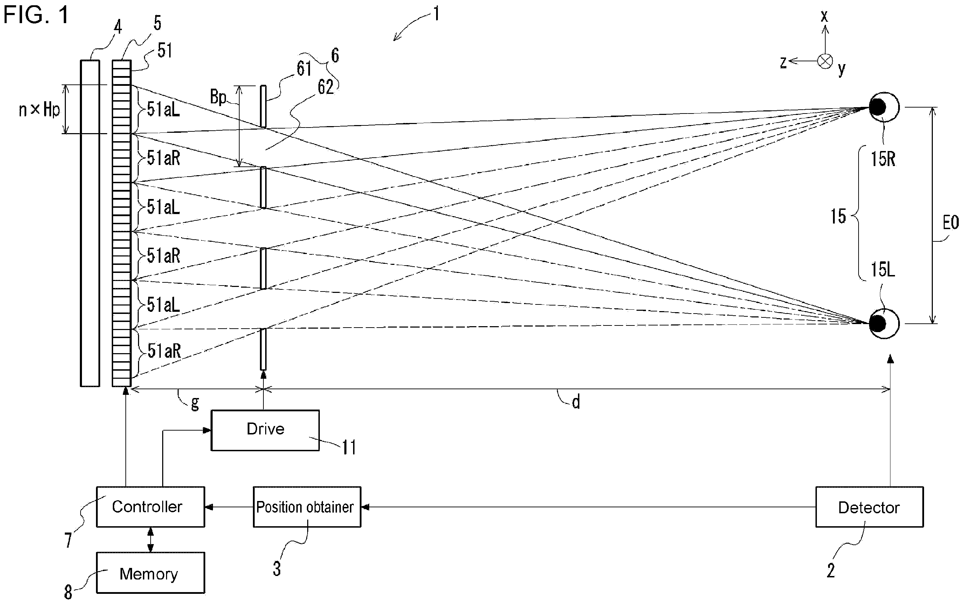

FIG. 1 is a diagram of a 3D display device according to an embodiment of the present disclosure viewed in a vertical direction. A 3D display device 1 according to the present embodiment includes a display panel 5, a barrier 6, a detector 2, and a controller 7.

The detector 2 captures an image of the face of a user. The detector 2 captures an image of the face of the user who views a 3D image displayed by the 3D display device 1. The detector 2 may detect the positions of a left eye 15L and a right eye 15R of the user and output the positions to the controller 7. The detector 2 may include, for example, a camera. The detector 2 may capture an image of the face of the user with the camera. The detector 2 may use an image of the user's face captured with the camera to detect the positions of the left eye 15L and the right eye 15R. The detector 2 may use an image captured with a single camera to detect the positions of the left eye 15L and the right eye 15R as coordinates in a 3D space. The detector 2 may use images captured with two or more cameras to detect the positions of the left eye 15L and the right eye 15R as coordinates in a 3D space. The detector 2 may use an image captured with the camera to detect a 3D image projected onto the face of the user. The left eye 15L is also referred to as a first eye. The right eye 15R is also referred to as a second eye. For the left eye 15L and the right eye 15R not being distinguished, the left eye 15L and the right eye 15R are collectively referred to as eyes 15.

The detector 2 may include a visible light camera or an infrared camera. The detector 2 may include both a visible light camera and an infrared camera. The detector 2 may function both as a visible light camera and an infrared camera. The detector 2 may include, for example, a charge-coupled device (CCD) image sensor or a complementary metal-oxide semiconductor (CMOS) image sensor.

The detector 2 may include no camera and may be connected to an external camera. The detector 2 may include an input terminal for receiving signals from the external camera. The external camera may be connected to the input terminal directly. The external camera may be connected to the input terminal indirectly through a shared network. The detector 2 including no camera may include an input terminal for receiving image signals from a camera. The detector 2 including no camera may use the image signals received through the input terminal to detect the positions of the left and right eyes.

The detector 2 may include, for example, a sensor. The sensor may be an ultrasonic sensor or an optical sensor. The detector 2 may detect the position of the head of the user by the sensor, and the positions of the left eye 15L and the right eye 15R based on the position of the head. The detector 2 may use a single sensor or two or more sensors to detect the positions of the left eye 15L and the right eye 15R as coordinates in a 3D space.

The 3D display device 1 may not include the detector 2. When the 3D display device 1 does not include the detector 2, the 3D display device 1 may include an input terminal for receiving signals from an external detection device. The external detection device may be connected to the input terminal. The external detection device may use electrical signals or optical signals as transmission signals transmitted to the input terminal. The external detection device may be connected to the input terminal indirectly through a shared communication network. The 3D display device 1 may receive positional coordinates indicating the positions of the left and right eyes input from the external detection device.

The detector 2 may detect the positions of the eyes 15 of the user. The detector 2 may not detect the positions of the eyes 15. In the 3D display device 1, the controller 7 may detect the positions of the eyes 15. The 3D display device 1 may include a position obtainer 3 that detects the positions of the eyes 15 and outputs the positions to the controller 7.

The display panel 5 displays a parallax image including a left-eye image (first image) and a right-eye image (second image) having parallax with respect to the left-eye image. The left-eye image is projected onto the first eye 15L of the user. The right-eye image is projected onto the second eye 15R of the user. The parallax image is also referred to as a composite image. The barrier 6 is an optical element defining a traveling direction of image light emitted from the display panel 5. The barrier 6 is also referred to as a parallax barrier. The controller 7 combines the first image and the second image to generate a parallax image. The controller 7 may combine the first image and the second image based on at least one of the position of the first eye 15L or the position or the second eye 15R detected by the detector 2.

The controller 7 causes the display panel 5 to display the generated parallax image. The display panel 5 may include multiple display areas in its active area. Each of the multiple display areas may correspond to one of multiple reference indexes. The reference index is also simply referred to as an index. The controller 7 combines parallax images each to be displayed on the corresponding one of multiple display areas with respect to the reference index for the display area.

The display panel 5 may be a transmissive display panel or a self-luminous display panel. The transmissive display panel may be, for example, a liquid crystal display panel. For example, the self-luminous display panel may be a display panel including a self-luminous element such as a light-emitting diode (LED) element, an organic electroluminescent (OEL) element, an organic LED (OLED) element, or a semiconductor laser diode (LD) element. In the present embodiment, the display panel 5 is a liquid crystal display panel.

For the display panel 5 being a transmissive display panel, the 3D display device 1 includes an illuminator 4. The illuminator 4 may illuminate a surface of the display panel 5. The illuminator 4 may include, for example, a light source, a light guide plate, a diffuser plate, and a diffuser sheet. The illuminator 4 emits, from the light source, illumination light that then spreads uniformly for illuminating the surface of the display panel 5 through, for example, the light guide plate, the diffuser plate, or the diffuser sheet. The illuminator 4 may emit the uniform light toward the display panel 5.

The illuminator 4 includes a visible light source that emits visible light. The visible light source may be, for example, an LED element, a cold cathode fluorescent lamp, a halogen lamp, or a xenon lamp. The illuminator 4 may include an infrared light source that emits infrared light. The infrared light source may be, for example, an infrared LED element. The 3D display device 1 may drive the visible light source and the infrared light source separately. When the 3D display device 1 drives the visible light source and the infrared light source, a 3D image displayed by the 3D display device 1 includes a visible light component and an infrared light component. When the 3D display device 1 drives the infrared light source alone, a 3D image displayed by the 3D display device 1 includes an infrared light component alone. When the detector 2 includes or functions as an infrared camera, the detector 2 may detect an infrared light component of the 3D image projected onto the face of the user.

The illuminator 4 may include multiple infrared LED elements. The multiple infrared LED elements may be distributed on the entire illuminator 4 or may be unevenly located on a part of the illuminator 4. The illuminator 4 may include the visible light source at the center of its light emitting surface. The multiple infrared LED elements may surround the visible light source.

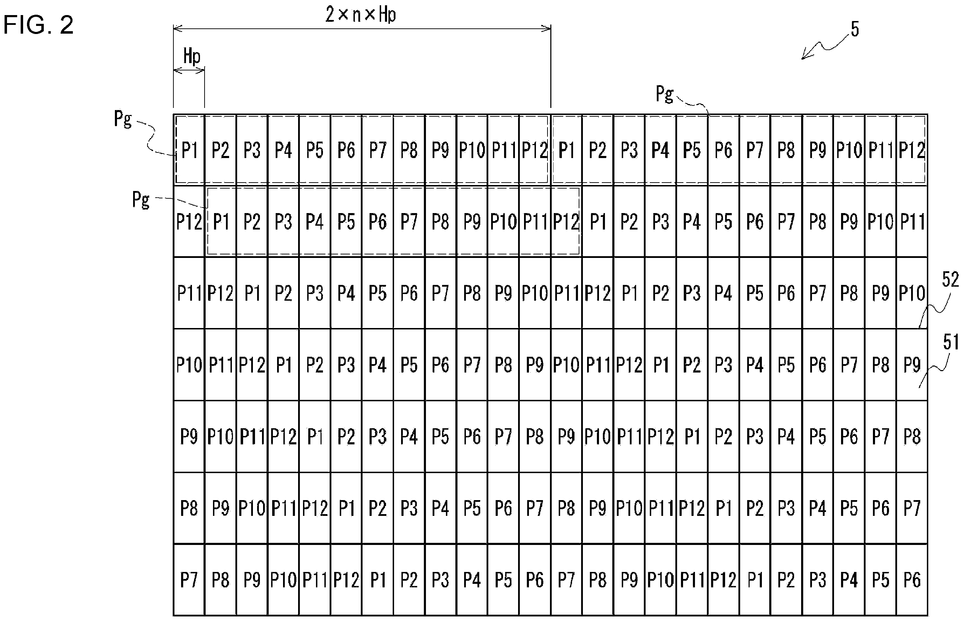

As illustrated in FIG. 2, for example, the display panel 5 includes a planar active area 51 including multiple divisional sections. The active area 51 displays a parallax image. The parallax image includes a first image and a second image that has parallax with respect to the first image. The divisional sections are defined by a black matrix 52 in a grid in a first direction and in a second direction orthogonal to the first direction. The direction orthogonal to the first and second directions is referred to as a third direction. The first direction may be referred to as a horizontal direction. The second direction may be referred to as a vertical direction. The third direction may be referred to as a depth direction. The first, second, and third directions are not limited to the directions referred to above. In the drawings, the first direction refers to x-direction, the second direction to y-direction, and the third direction to z-direction.

Each divisional section corresponds to one subpixel. Thus, the active area 51 includes multiple subpixels arranged in a grid in the horizontal and vertical directions.

Each subpixel has one of the colors red (R), green (G), and blue (B). One pixel may be a set of three subpixels with R, G, and B. One pixel may be referred to as one picture element. For example, multiple subpixels included in one pixel are arranged in the horizontal direction. For example, subpixels having the same color are arranged in the vertical direction.

As described above, multiple subpixels arranged in the active area 51 form subpixel groups Pg. The subpixel groups Pg are repeatedly arranged in the horizontal direction. The subpixel groups Pg are repeatedly arranged in the vertical direction at positions shifted by one subpixel in the horizontal direction from the corresponding subpixels. The subpixel groups Pg each include subpixels in predetermined rows and columns. More specifically, the subpixel groups Pg each include $(2 \times n \times b)$ subpixels P1 to Pk($k = 2 \times n \times b$), which are consecutively arranged in b row(s) in the vertical direction and in $2 \times n$ columns in the horizontal direction. In the example illustrated in FIG. 2, n is 6, and b is 1. The active area 51 includes the subpixel groups Pg each including one subpixel in the vertical direction and 12 continuous subpixels P1 to P12 arranged in the horizontal direction. In the example illustrated in FIG. 2, some of the subpixel groups Pg are denoted by reference signs.

Each subpixel group Pg is the smallest unit controllable by the controller 7 to display an image. The subpixels P1 to Pk($k = 2 \times n \times b$) included in each subpixel group Pg with the same identification information are controlled by the controller 7 at the same time. For example, the controller 7 may switch the image to be displayed by the subpixels P1 from the left-eye image to the right-eye image at the same time in all the subpixel groups Pg.

Parallax Barrier

As illustrated in FIG. 1, the barrier 6 is planar along the active area 51. The barrier 6 may be arranged at a predetermined distance (gap) g from the active area 51. The barrier 6 may be located opposite to the illuminator 4 from the display panel 5. The barrier 6 may be located between the display panel 5 and the illuminator 4.

The barrier 6 may be movable in the traveling direction of image light emitted from the display panel 5. In other words, the barrier 6 may be movable in the third direction illustrated in FIG. 1. The 3D display device 1 may include a drive 11 that drives the barrier 6 in the third direction. The drive 11 may be controlled by the controller 7. The drive 11 may drive the barrier 6 in the third direction with, for example, a motor or a piezoelectric element. The drive 11 may drive the barrier 6 in the positive or negative third direction.

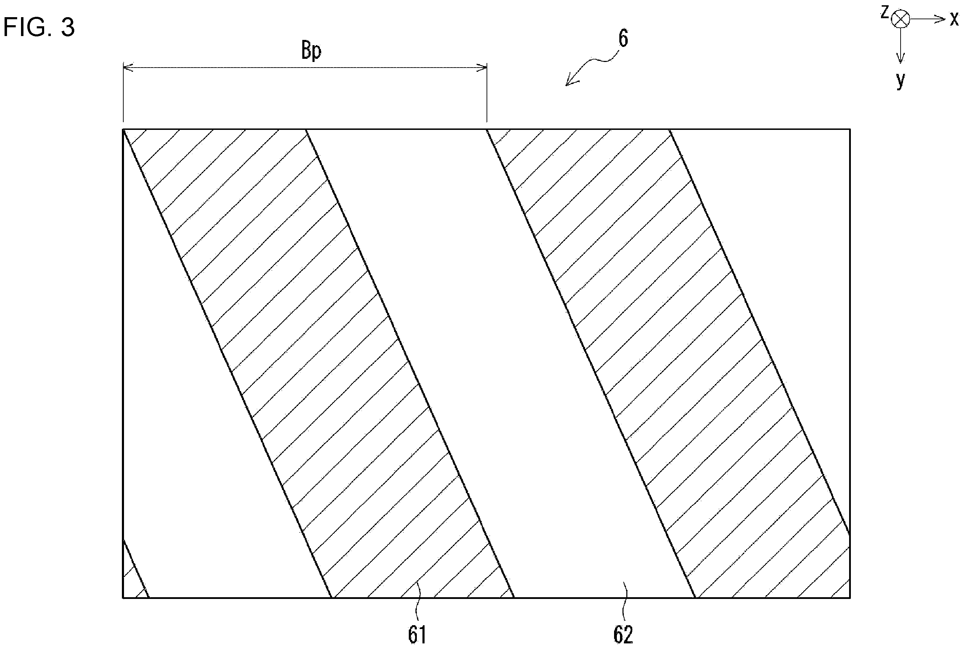

The barrier 6 defines a traveling direction of image light from the subpixels for each of multiple transmissive portions 62. The traveling direction is the direction in which image light travels. As illustrated in FIG. 3, the transmissive portions 62 are strip areas each elongated in a predetermined direction in the plane. The predetermined direction is at a predetermined angle other than zero with the vertical direction. As illustrated in FIG. 1, the barrier 6 defines the direction of image light from each of the subpixels arranged in the active area 51 to define parts in the active area 51 viewable with the eyes 15 of the user. Parts in the active area 51 emitting image light that reaches the positions of the eyes 15 of the user are hereafter referred to as viewable sections 51a. Parts in the active area 51 emitting image light that reaches the position of the left eye 15L of the user are hereafter referred to as left viewable sections 51aL (first viewable sections). Parts in the active area 51 emitting image light that reaches the position of the right eye 15R of the user are referred to as right viewable sections 51aR (second viewable sections).

As illustrated in FIG. 3, the barrier 6 includes multiple light-blocking portions 61 for blocking image light. The light-blocking portions 61 define transmissive portions 62 between adjacent light-blocking portions 61. The transmissive portions 62 have a higher light transmittance than the light-blocking portions 61. In other words, the light-blocking portions 61 have a lower light transmittance than the transmissive portions 62.

The transmissive portions 62 are parts of the barrier 6 to transmit light incident on the barrier 6. The transmissive portions 62 may transmit light with a transmittance of a first predetermined value or greater. The first predetermined value may be, for example, substantially 100% or a value less than 100%. The first predetermined value can be a value less than 100%, such as 80% or 50%, when image light emitted from the active area 51 falls within the range of good visibility. The light-blocking portions 61 are parts of the barrier 6 to substantially block light incident on the barrier 6. In other words, the light-blocking portions 61 prevent an image displayed in the active area 51 on the display panel 5 from being viewable with the eyes of the user. The light-blocking portions 61 may block light with a transmittance of a second predetermined value or less. The second predetermined value may be, for example, substantially 0% or a value greater than 0%. The second predetermined value may be close to 0%, such as 0.5%, 1%, or 3%. The first predetermined value can be several times, or for example, 10 times, greater than the second predetermined value.

The transmissive portions 62 and the light-blocking portions 61 extend in a predetermined direction along the active area 51. The transmissive portions 62 and the light-blocking portions 61 are arranged alternately in a direction orthogonal to the predetermined direction. The transmissive portions 62 define the traveling direction of image light from each of the subpixels.

As illustrated in FIG. 1, a barrier pitch Bp as an interval at which the transmissive portions 62 are arranged in the horizontal direction and the gap g between the active area 51 and the barrier 6 are determined to satisfy Formula 1 and Formula 2 below using an optimum viewing distance d and a reference distance E0.

$$E0{:}d = (n \times Hp){:}g \qquad (1)$$

$$d{:}Bp = (d + g){:}(2 \times n \times Hp) \qquad (2)$$

The optimum viewing distance d is the distance between the right eye or the left eye of the user and the barrier 6. At the optimum viewing distance d, the horizontal length of each viewable section 51a is equivalent to n subpixels. The direction of a straight line passing through the right eye and the left eye (interocular direction) corresponds to the horizontal direction. The reference distance E0 is a reference interocular distance E of the user. The reference distance E0 may be, for example, 61.1 to 64.4 mm, as calculated through studies conducted by the National Institute of Advanced Industrial Science and Technology. Hp is the horizontal length of a subpixel as illustrated in FIG. 2.

The barrier 6 may be a film or a plate with a transmittance less than the second predetermined value. In this case, the light-blocking portions 61 are parts of the film or the plate. The transmissive portions 62 are slits in the film or the plate. The film may be formed from resin or another material. The plate may be formed from resin, metal, or another material. The barrier 6 may be formed from a material other than a film or a plate. The barrier 6 may include a base made of a light-blocking material or of a material containing an additive with light-blocking properties.

The barrier 6 may include a liquid crystal shutter. The liquid crystal shutter can control the light transmittance in accordance with a voltage applied. The liquid crystal shutter may include multiple pixels and control the light transmittance for each pixel. The liquid crystal shutter can form a portion with a high light transmittance or a portion with a low light transmittance in an intended shape. For the barrier 6 being a liquid crystal shutter, the transmissive portions 62 may have a transmittance of the first predetermined value or greater. For the barrier 6 being a liquid crystal shutter, the light-blocking portions 61 may have a transmittance of the second predetermined value or less.

In this structure described above, the barrier 6 may transmit image light from selected subpixels in the active area 51 through the transmissive portions 62 to reach the user's right eye. The barrier 6 may transmit image light from the other subpixels through the transmissive portions 62 to reach the user's left eye.

Parallax Image

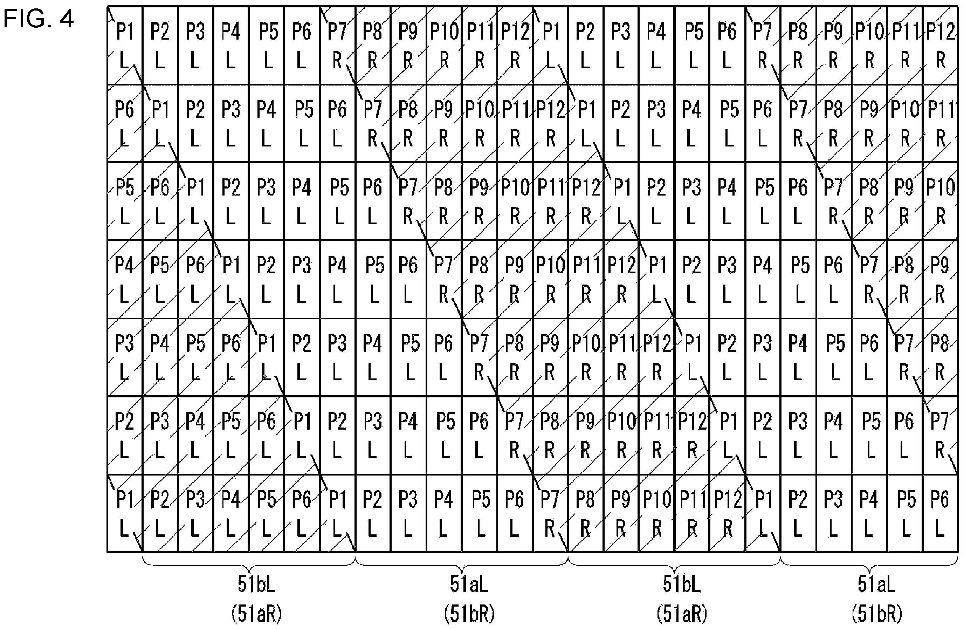

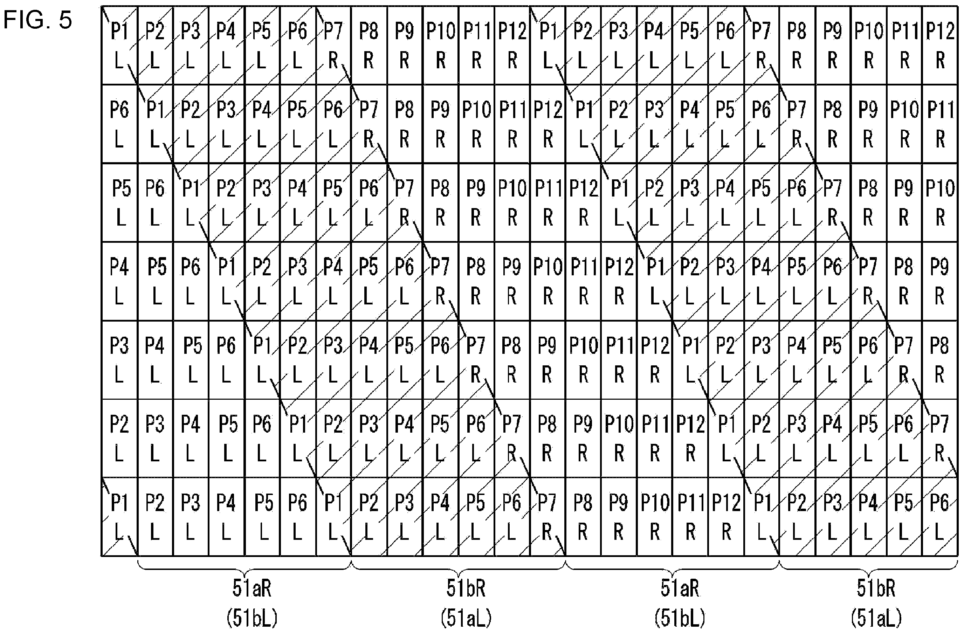

An image viewable to the user will now be described in detail with reference to FIGs. 4 and 5. As described above, the left viewable sections 51aL in FIG. 4 are defined in the active area 51 that are viewable with the left eye 15L of the user when image light transmitted through the transmissive portions 62 in the barrier 6 reaches the left eye 15L of the user. Left unviewable sections 51bL are unviewable with the left eye 15L of the user when image light is blocked by the light-blocking portions 61 in the barrier 6. The left viewable sections 51aL include a half of the subpixels P1, all of the subpixels P2 to P6, and a half of the subpixels P7.

The right viewable sections 51aR in FIG. 5 are defined in the active area 51 that are viewable with the right eye 15R of the user when image light from other subpixels transmitted through the transmissive portions 62 in the barrier 6 reaches the right eye 15R of the user. Right unviewable sections 51bR are unviewable with the right eye 15R of the user when image light is blocked by the light-blocking portions 61 in the barrier 6. The right viewable sections 51aR include a half of the subpixels P7, all of the subpixels P8 to P12, and a half of the subpixels P1.

The left-eye image displayed by the subpixels P1 to P6 are viewable with the left eye 15L. The right-eye image displayed by the subpixels P7 to P12 are viewable with the right eye 15R. The left-eye image and the right-eye image have parallax between them and are included in a parallax image. More specifically, the left eye 15L views a half of the left-eye image displayed by the subpixels P1, all the left-eye images displayed by the subpixels P2 to P6, and a half of the right-eye image displayed by the subpixels P7. The right eye 15R views a half of the right-eye image displayed by the subpixels P7, all the right-eye images displayed by the subpixels P8 to P12, and a half of the left-eye image displayed by the subpixels P1. In FIGs. 4 and 5, subpixels to show the left-eye image are each given reference sign L, and subpixels to show the right-eye image are each given reference sign R.

In this state, the left eye 15L of the user views the largest area of the left-eye image, and the smallest area of the right-eye image. The right eye 15R of the user views the largest area of the right-eye image, and the smallest area of the left-eye image. Thus, the user can view a 3D image with least crosstalk.

In the 3D display device 1 with the structure described above, the user with the interocular distance E being the reference distance E0 can appropriately view a 3D image when the left-eye image is displayed by subpixels included in the left viewable sections 51aL, and the right-eye image having parallax with the left-eye image is displayed by subpixels included in the right viewable sections 51aR. In the structure described above, the left-eye image is displayed by subpixels with at least its half being viewable with the left eye 15L, and the right-eye image is displayed by subpixels with at least its half being viewable with the right eye 15R. In some embodiments, subpixels to display the left-eye image or the right-eye image may be determined as appropriate to minimize crosstalk based on the left viewable sections 51aL and the right viewable sections 51aR in accordance with the design of, for example, the active area 51 and the barrier 6. In accordance with the aperture ratio or other factors of the barrier 6, for example, the left-eye image may be displayed by subpixels with at least a predetermined proportion being viewable with the left eye 15L, and the right-eye image may be displayed by subpixels with at least a predetermined proportion being viewable with the right eye 15R. Structure of Controller

The controller 7 may be connected to the components of the 3D display device 1 to control these components. The components controlled by the controller 7 may include the detector 2, the display panel 5, and the drive 11. The 3D display device 1 may include, in addition to the controller 7 that controls the display panel 5 and the drive 11, another controller that controls the detector 2. The controller 7 may be, for example, a processor. The controller 7 may include one or more processors. The processors may include a general-purpose processor that reads a specific program and performs a specific function, and a processor dedicated to specific processing. The dedicated processor may include an application-specific integrated circuit (ASIC). The processors may include, for example, a programmable logic device (PLD). The PLD may include a field-programmable gate array (FPGA). The controller 7 may be either a system on a chip (SoC) or a system in a package (SiP) in which one or more processors cooperate with other components. The controller 7 may include a memory 8, and store various items of information or programs to operate each component of the 3D display device 1 into the memory 8. The memory 8 may be, for example, a semiconductor memory. The memory 8 may function as a work memory for the controller 7. The memory 8 includes any storage such as a random-access memory (RAM) or a read-only memory (ROM). The memory 8 may store a first table described later.

Index Adjustment

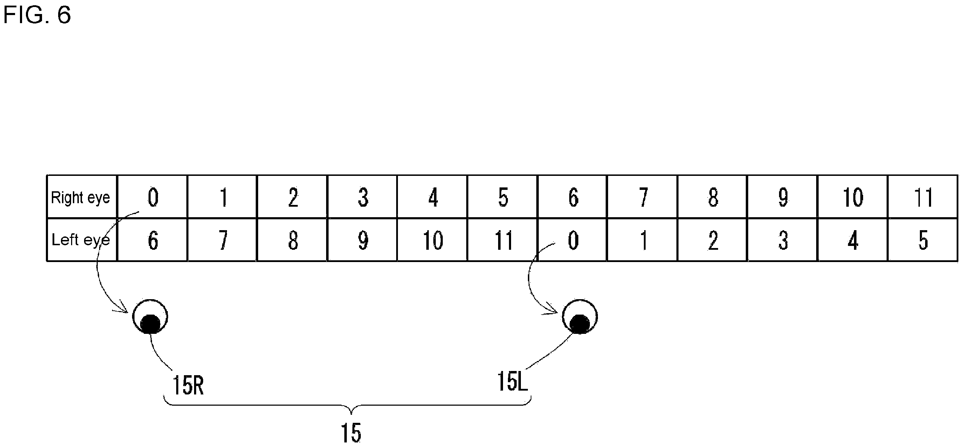

As illustrated in FIG. 6, the positions of the right eye 15R and the left eye 15L in the horizontal direction are identified using pieces of information 0 to 11. With the interocular distance E being the reference distance E0, information identifying the position of the right eye 15R is the same as information identifying the position of the left eye 15L.

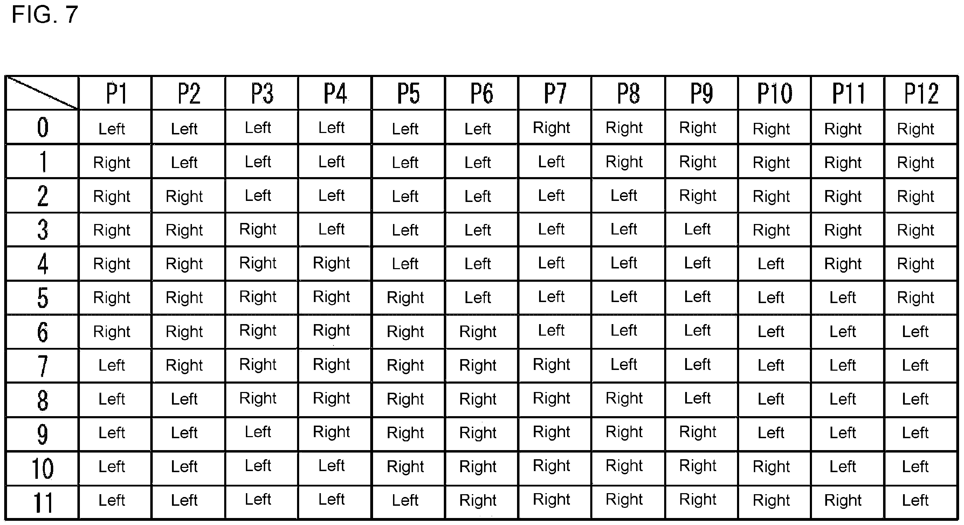

As illustrated in FIG. 7, the first table stores the positions of the left eye 15L and the right eye 15R with the interocular distance E being the reference distance E0, the corresponding left subpixels with at least a predetermined proportion being in the left viewable sections 51aL, and the corresponding right subpixels with at least a predetermined proportion being in the right viewable sections 51aR. The example illustrated in FIG. 7 includes the pieces of information 0 to 11 for identifying the positions of the eyes 15 in the column direction, and the pieces of information P1 to P12 for identifying subpixels in the row direction. The information identifying the positions of the eyes 15 is referred to as the index or the reference index. The first table shows, for the eyes 15 at each position, whether the corresponding subpixel is a left subpixel or a right subpixel. In FIG. 7, Left refers to a left subpixel, and Right refers to a right subpixel. As described with reference to FIG. 6, when the left eye 15L is at the position 0 with the interocular distance E being the reference distance E0, the right eye 15R is at the position 0. In this case, the subpixels P1 to P6 are left subpixels, and the subpixels P7 to P12 are right subpixels in the example illustrated in FIG. 7. When the left eye 15L is at the position 1, the right eye 15R is at the position 1. In this case, the subpixels P2 to P7 are left subpixels, and the subpixels P1 and P8 to P12 are right subpixels. The controller 7 selects one of the indexes 0 to 11. The controller 7 defines an arrangement of the left-eye image and the right-eye image to be displayed on the display surface of the display panel 5 based on the pieces of information P1 to P12 for identifying subpixels corresponding to the selected index.

The controller 7 generates a parallax image by combining the first image and the second image based on the position of the left eye 15L or the position of the right eye 15R detected by the detector 2 or the position obtainer 3 and the index stored in the first table. The controller 7 may adjust an arrangement of the first image and the second image to be displayed on the display surface of the display panel 5 based on the position of the left eye 15L or the position of the right eye 15R and the index. A user with the interocular distance E being the reference distance E0 can thus view a 3D image appropriately.

The positions of the user's eyes 15 may move in the first direction (horizontal direction). When the controller 7 fixes the index to one of the indexes 0 to 11 stored in the first table and generates a parallax image based on the fixed index, crosstalk may occur in a 3D image viewed by the user.

In the 3D display device 1 according to the present embodiment, the controller 7 adjusts the index. To adjust the index, the controller 7 generates a parallax image for index adjustment, and causes the generated parallax image for index adjustment to be displayed on the display panel. The parallax image for index adjustment is also referred to as a reference image.

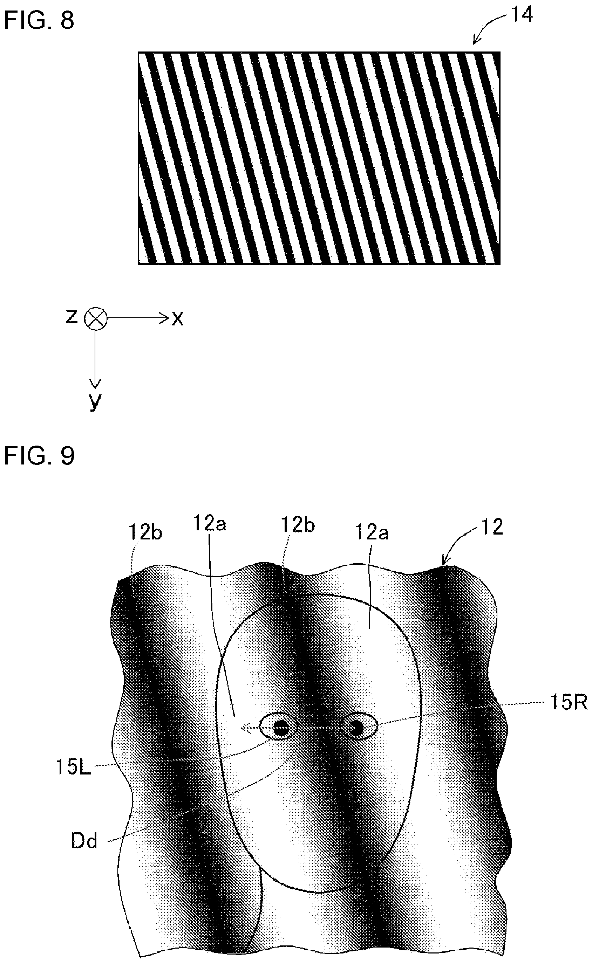

The reference image is a composite image of the first image and the second image different from each other. The first image and the second image included in the reference image may be monochrome images each having a color different from each other. For the first image and the second image included in the reference image, one image (the first image) may be a black image and the other image (the second image) may be a white image. In this case, the reference image is a striped image with white areas and black areas alternately arranged periodically as illustrated in FIG. 8. The reference image may be a visible light image or an infrared light image. The visible light image may be a black-white striped image or a color striped image. The infrared image may be a composite striped image of the first image and the second image each with image light having a wavelength different from each other.

The controller 7 combines the first image and the second image different from each other based on a predetermined index and generates the reference image. The predetermined index may be one of the indexes 0 to 11 stored in the first table. The reference image may be a composite image based on the right eye 15R being at the position 0 in the first table, or a composite image based on both the left eye 15L and the right eye 15R being at the position 0 in the first table. The reference image generated based on the predetermined index is also referred to as a first reference image 14. The controller 7 causes the display panel 5 to display the generated first reference image 14. FIG. 8 illustrates an example reference image displayed on the display panel 5 viewed in the depth direction. The first reference image 14 displayed on the display panel 5 reaches the user's left eye 15L and right eye 15R through the barrier 6 and, for example, an optical element. The first reference image 14 is projected onto the face of the user.

The controller 7 controls the detector 2 to capture an image of the face of the user onto which the first reference image 14 is projected. FIG. 9 is a diagram of an example image captured by the detector 2. Hereafter, the image captured by the detector 2 is also referred to as a first detection image 12. FIG. 9 illustrates an example first detection image 12 with the first reference image 14 illustrated in FIG. 8 being used. As illustrated in FIG. 9, the first detection image 12 includes the first reference image 14 projected onto the user's left eye 15L and right eye 15R and the face of the user. The first reference image 14 projected onto the face of the user may form a striped pattern in the first detection image 12 as illustrated in, for example, FIG. 9. The striped pattern is also referred to as a shading pattern.

Index adjustment performed by the 3D display device 1 based on the first detection image 12 is described below. The detector 2 detects at least one of the position of the left eye 15L or the position of the right eye 15R, and the position of the shading pattern. Hereafter, the detector 2 detects the position of the right eye 15R. The position of the shading pattern may be the distribution of luminance values of the shading pattern. The shading pattern includes a high-luminance area 12a and a low-luminance area 12b. The high-luminance area 12a is a strip area that is brighter in the shading pattern. The low-luminance area 12b is a strip area that is darker in the shading pattern.

When the first reference image 14 is generated based on an appropriate index corresponding to the positions of the user's eyes 15, the high-luminance area 12a overlaps the right eye 15R in the first detection image 12. No overlap between the high-luminance area 12a and the right eye 15R indicates that the index used to generate the first reference image 14 is not an appropriate index corresponding to the actual positions of the user's eyes 15.

The controller 7 adjusts the index based on the first detection image 12. Hereafter, the index used to generate the first reference image 14 is 0.

The controller 7 detects a deviation distance Dd between the position of the right eye 15R and the position of the high-luminance area 12a in the first direction (the horizontal direction) as a value indicating a deviation of the index. The position of the high-luminance area 12a may be a position with the highest luminance value in the first direction in the high-luminance area 12a. For example, when the deviation distance Dd between the position of the right eye 15R and the position of the high-luminance area 12a in the first direction is equivalent to three subpixels, the value of deviation in the index is +3. The controller 7 then changes the index from 0 to 3. When the deviation distance Dd between the position of the right eye 15R and the position of the high-luminance area 12a in the first direction is equivalent to six subpixels, the value of change in the index is +6. The controller 7 then changes the index from 0 to 6. Thus, the controller 7 can adjust the index based on the image of the face of the user onto which the first reference image 14 is projected.

With index adjustment performed based on the image of the face of the user onto which the first reference image 14 is projected, the 3D display device 1 can perform adjustment without relying on the user's subjective determination. The 3D display device 1 thus allows the user to view a 3D image appropriately.

The 3D display device 1 uses no determination by the user in adjusting the index. The 3D display device 1 can thus repeat index adjustment multiple times without burdening the user and can improve the accuracy in index adjustment.

The controller 7 may adjust the index based on the deviation distance between the positions of left eye 15L and a low-luminance area 12b in the first direction. This allows index adjustment based on the image of the face of the user onto which the first reference image 14 is projected when the high-luminance area 12a in the shading pattern is difficult to identify under, for example, external light.

When determining that the high-luminance area 12a in the shading pattern is difficult to identify, the controller 7 may generate a reference image that is a composite of the left-eye image being a white image and the right-eye image being a black image. The reference image that is a composite of the left-eye image being a white image and the right-eye image being a black image is also referred to as an inverted reference image. The controller 7 may adjust the index based on an image of the user viewing the inverted reference image captured by the detector 2. The controller 7 may adjust the index based on the deviation distance between the positions of the right eye 15R and a low-luminance area in the shading pattern included in the inverted reference image projected onto the face of the user. This allows index adjustment based on the image of the face of the user onto which the inverted reference image is projected when the high-luminance area 12a in the shading pattern is difficult to identify under, for example, external light.

The 3D display device 1 may adjust the index at nighttime. The positions of the user's eyes 15 or the first reference image 14 projected onto the face of the user are then less likely to be undetectable under, for example, external light. Nighttime may be, for example, the time between sunset and sunrise. Nighttime may be any time with a dark surrounding environment.

The 3D display device 1 may readjust the index after adjusting the index as described above. To readjust the index, the controller 7 combines the first image and the second image different from each other based on the adjusted index and generates a second reference image. The controller 7 causes the display panel 5 to display the second reference image. The second reference image displayed on the display panel 5 reaches the user's left eye 15L and right eye 15R through the barrier 6 and, for example, an optical element. The second reference image is projected onto the face of the user. The controller 7 controls the detector 2 to capture an image of the face of the user onto which the second reference image is projected. The image of the face of the user captured by the detector 2 onto which the second reference image is projected is the same as or similar to the first detection image 12 illustrated in FIG. 9. However, the positions of the user's eyes 15 and the position of the shading pattern may differ from the first detection image 12 illustrated in FIG. 9. The process performed by the 3D display device 1 to readjust the index is the same as or similar to the process performed to adjust the index, and will not be described in detail.

The 3D display device 1 performs index readjustment and achieves more accurate index adjustment. The 3D display device 1 thus allows the user to view a 3D image appropriately. The 3D display device 1 can repeat index adjustment multiple times and achieves more accurate index adjustment.

The 3D display device 1 may display the reference image simply in index adjustment. In no index adjustment, the 3D display device 1 may display various items of information about the movable body, such as a vehicle, a vessel, or an aircraft, on which the 3D display device 1 is mounted. The 3D display device 1 may cause the reference image to be displayed between the frames of consecutive images indicating the various items of information, and may cause the detector 2 to capture an image of the face of the user onto which the reference image is projected. Thus, the 3D display device 1 can repeat index adjustment while displaying various items of information about the movable body. This allows the 3D display device 1 to constantly use an appropriate index corresponding to the positions of the user's eyes 15. The user can view a 3D image appropriately.

In the 3D display device 1, the detector 2 detects at least one of the position of the left eye 15L or the position of the right eye 15R, and the position of the shading pattern. However, the detector 2 may not detect at least one of the position of the left eye 15L or the position of the right eye 15R, and the position of shading pattern. In this case, the 3D display device 1 may include the position obtainer 3 that detects at least one of the position of the left eye 15L or the position of the right eye 15R, and the position of shading pattern.

The display panel 5 may include multiple display areas having indexes different from one another in the active area 51. The controller 7 may adjust the index for a display area located at the center of the active area 51 as described above, and may adjust indexes for other display areas through synchronization with the index for the display area located at the center of the active area 51.

The 3D display device 1 may correct the first detection image 12 and adjust the index based on the corrected first detection image 12. The first detection image 12 may be corrected based on the reflectance of the face of the user. Correction of the first detection image 12 and index adjustment using the corrected first detection image 12 will be described below.

The controller 7 causes the display panel 5 to display a test image before causing the display panel 5 to display the first reference image 14. The test image may be a monochrome image. The monochrome image may be a white image. The test image may be generated by, for example, combining a white first image and a white second image. The controller 7 may cause the display panel 5 to display the test image before or after generating the first reference image 14.

The controller 7 causes the detector 2 to capture an image of the face of the user onto which the test image is projected. The detector 2 measures the reflectance of the face of the user based on a reflectance measurement image (hereafter, simply referred to as a measurement image) obtained by capturing an image. The reflectance of the face of the user may be measured for each pixel in the measurement image based on the luminance value of the test image displayed on the display panel 5 and the luminance value of each pixel in the measurement image. The detector 2 detects at least one of the position of the left eye 15L or the position of the right eye 15R based on the measurement image. Hereafter, the detector 2 detects the position of the right eye 15R.

After the detector 2 detects the reflectance of the face of the user and the position of the right eye 15R, the controller 7 causes the display panel 5 to display the first reference image 14. The controller 7 causes the detector 2 to capture an image of the face of the user onto which the first reference image 14 is projected and obtains a first detection image 12. The controller 7 corrects the first detection image 12 with the luminance value of each pixel in the first detection image 12 divided by the reflectance of the corresponding pixel measured from the measurement image.

The corrected first detection image 12 is less susceptible to the reflectance of the face of the user. The corrected first detection image 12 may substantially include the shading pattern alone without the face of the user. The detector 2 detects the position of the high-luminance area 12a in the shading pattern based on the corrected first detection image 12. The corrected second detection image 13 is less susceptible to the reflectance of the face of the user. Thus, detecting the position of the high-luminance area 12a from the corrected second detection image 13 allows accurate detection of the position of the high-luminance area 12a.

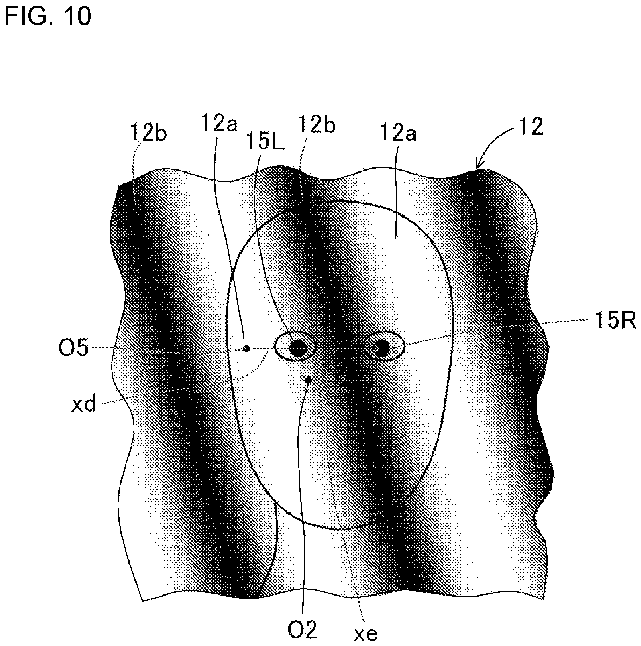

The index adjustment involves determination on the number of subpixels that is equivalent to the deviation distance Dd between the position of the right eye 15R and the position of the high-luminance area 12a in the first direction (x-direction). The positions of the right eye 15R and the high-luminance area 12a are expressed as coordinates with respect to the origin of the camera included in the detector 2. For the above determination, the coordinates of the right eye 15R and the high-luminance area 12a are to be converted to coordinates with respect to the origin of the display panel 5. This conversion of coordinates is also referred to as origin correction. FIG. 10 is a table describing origin correction. The origin O5 of the display panel 5 is located in a high-luminance area 12a. The origin O2 of the camera is at the position illustrated in FIG. 10. The controller 7 converts the coordinates of the right eye 15R and the high-luminance area 12a with respect to the origin O2 (collectively referred to as x) to coordinates with respect to the origin O5, or x + xd - xe, where xd is the distance between the right eye 15R and the high-luminance area 12a in x-direction, and xe is the x coordinate of the right eye 15R with respect to the origin O2. The controller 7 uses the origin correction described above to determine the number of subpixels that is equivalent to the deviation distance Dd, and adjusts the index based on the determination.

17      EP 4 187 310 A1      18

The 3D display device 1 with the structure described above detects the position of the right eye 15R from the measurement image, and detects the position of the high-luminance area 12a from the corrected first detection image 12, thus achieving accurate detection of the positions of the right eye 15R and the high-luminance area 12a. This allows accurate index adjustment.

The controller 7 may detect the position of the left eye 15L based on the measurement image. The controller 7 may adjust the index based on the deviation distance between the position of the left eye 15L detected from the measurement image and the position of a low-luminance area 12b detected from the corrected first detection image 12 in the first direction.

The controller 7 may cause the display panel 5 to display the inverted reference image instead of the first reference image 14. The controller 7 may cause the detector 2 to capture an image of the face of the user onto which the inverted reference image is projected and obtain the detection image. The controller 7 may correct the detection image using the reflectance of the face of the user and detect the positions of the right eye and the low-luminance area based on the corrected detection image. The controller 7 may adjust the index based on the deviation distance between the position of the right eye and the position of the low-luminance area in the first direction. This allows index adjustment based on the image of the face of the user onto which the inverted reference image is projected when the high-luminance area in the shading pattern is difficult to identify under, for example, external light.

To cause the display panel 5 to display the test image before generating the first reference image 14, the controller 7 may change the color or the luminance level of at least one of the first image or the second image based on the reflectance of the face of the user. This allows accurate detection of the positions of the eyes 15 and the shading pattern.

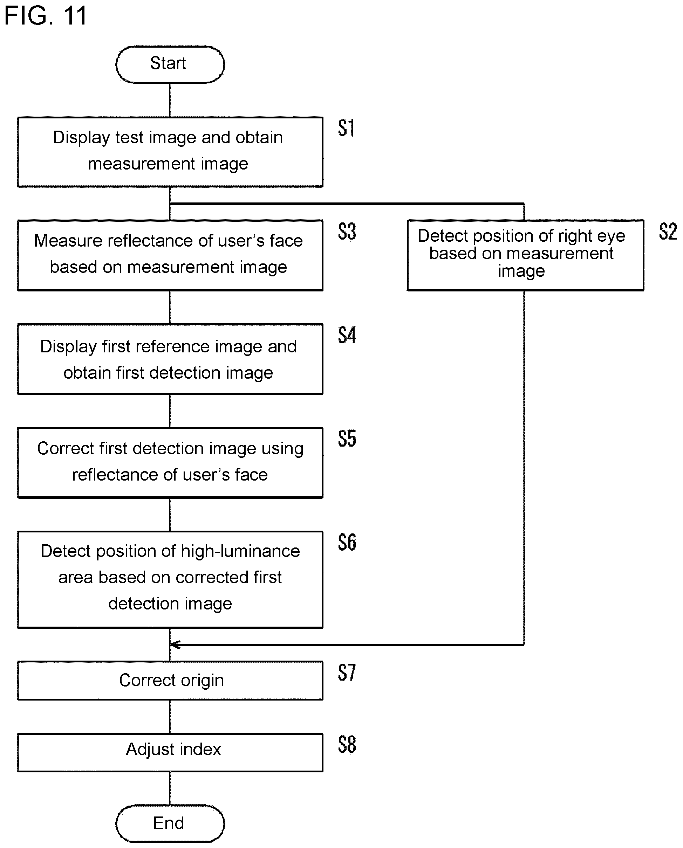

FIG. 11 is a flowchart of an example process for index adjustment. After starting the processing in the flowchart, the controller 7 causes the display panel 5 to display a test image and causes the detector 2 to capture an image of the face of the user onto which the test image is projected (a measurement image) in step S1. In step S2, the controller 7 detects the position of the right eye 15R based on the measurement image. In step S3, the controller 7 measures the reflectance of the face of the user based on the measurement image. In step S4, the controller 7 causes the display panel 5 to display the first reference image 14 and causes the detector 2 to capture an image of the face of the user onto which the first reference image 14 is projected (a first detection image 12). In step S5, the controller 7 corrects the first detection image 12 using the reflectance of the face of the user and obtains the corrected first detection image 12. In step S6, the controller 7 detects the position of the high-luminance area 12a based on the corrected first detection image 12. In step S7, the controller 7 performs origin correction based on the position of the right eye 15R detected in step S2 and the position of the high-luminance area 12a detected in step S6. In step S8, the controller 7 adjusts the index based on the deviation distance Dd with respect to the origin O5 of the display panel 5 and ends the flowchart.

To readjust the index, the 3D display device 1 may correct the image of the face of the user captured by the detector 2 onto which the second reference image is projected by using the reflectance of the face of the user, and may adjust the index based on the corrected image. Interocular Distance Correction

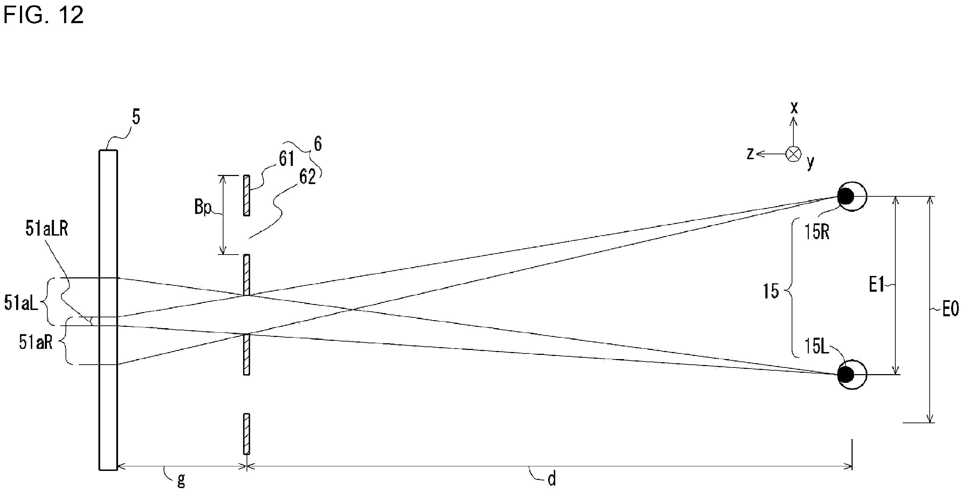

As illustrated in FIG. 12, with the interocular distance E1 of the user being the interocular distance E1 different from the reference distance E0, a part of the left viewable sections 51aL and a part of the right viewable sections 51aR may overlap each other to define a binocular viewable section 51aLR. Thus, some subpixels are left subpixels (first subpixels) determined to display the left-eye image based on the left viewable sections 51aL, and are also right subpixels (second subpixels) determined to display the right-eye image based on the right viewable sections 51aR. The left subpixels each are, for example, a subpixel with at least a predetermined proportion (e.g., a half) being in the left viewable sections 51aL. The right subpixels are each a subpixel with, for example, at least a predetermined proportion being in the right viewable sections 51aR.

With the right-eye image displayed by subpixels that are left subpixels and also right pixels, the number of right-eye images viewable with the left eye 15L increases. With the left-eye image displayed by subpixels that are left subpixels and also right pixels, the number of left-eye images viewable with the right eye 15R increases. Thus, when either the left-eye image or the right-eye image is displayed by the overlapping subpixels, crosstalk can increase. The controller 7 may correct the interocular distance to reduce crosstalk that may occur when the user with the interocular distance E1 different from the reference distance E0 views the 3D image displayed by the 3D display device 1 formed based on the reference distance E0.

To perform interocular distance correction, the controller 7 generates a parallax image for interocular distance correction and causes the display panel to display the generated parallax image. The parallax image for interocular distance correction may be the first reference image 14 combined based on the predetermined index or the second reference image combined based on the adjusted index. The parallax image for interocular distance correction may be different from the first reference image and the second reference image. Hereafter, the parallax image for interocular distance correction is the first reference image 14.

The controller 7 causes the display panel 5 to display the first reference image 14. The first reference image 14 displayed on the display panel 5 reaches the user's left eye 15L and right eye 15R through the barrier

10

6 and, for example, an optical element. The first reference image 14 is projected onto the face of the user.

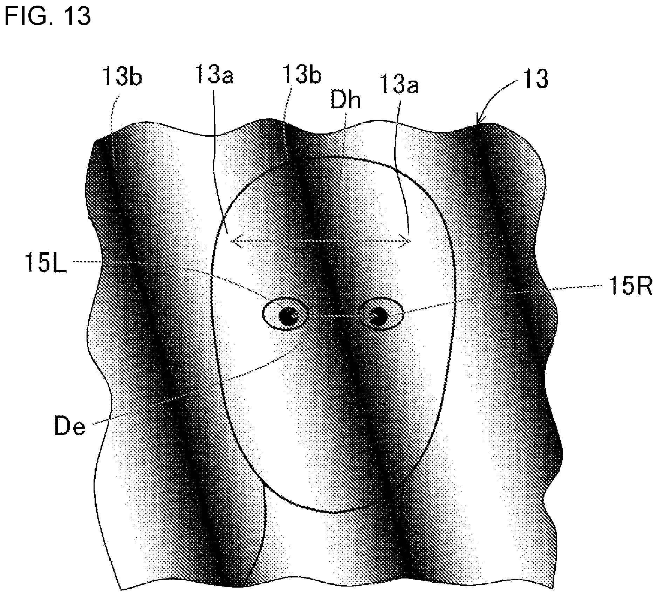

The controller 7 controls the detector 2 to capture an image of the face of the user onto which the first reference image 14 is projected. FIG. 13 is a diagram of an example image captured by the detector 2. The image captured by the detector 2 is also referred to as a second detection image 13. As illustrated in FIG. 13, the second detection image 13 includes the user's left eye 15L and right eye 15R and the first reference image 14 projected onto the face of the user. The first reference image 14 projected onto the face of the user may form a striped pattern in the second detection image 13 as illustrated in, for example, FIG. 13. The striped pattern is also referred to as a shading pattern.

Interocular distance correction performed by the 3D display device 1 based on the second detection image 13 will be described below. The detector 2 detects the positions of the left eye 15L and the right eye 15R and the position of the shading pattern. The position of the shading pattern may be the distribution of luminance values of the shading pattern. The shading pattern includes a high-luminance area 13a and a low-luminance area 13b. The high-luminance area 13a is a strip area that is brighter in the shading pattern. The low-luminance area 13b is a strip area that is darker in the shading pattern.

The 3D display device 1 without interocular distance correction has the structure based on the reference distance E0. With the user having the interocular distance E1 being the reference distance E0, the distance between the high-luminance area 13a and the low-luminance area 13b in the first direction (horizontal direction) is equal to the distance between the left eye 15L and the right eye 15R in the horizontal direction. In other words, with the user having the interocular distance E1 being the reference distance E0, the distance between adjacent high-luminance areas 13a in the horizontal direction is twice the distance between the first eye 15L and the second eye 15R in the horizontal distance. The distance between adjacent high-luminance areas 13a in the horizontal direction is also referred to as a horizontal distance Dh. The distance between the first eye 15L and the second eye 15R is also referred to as a horizontal distance De. The horizontal distance Dh may be calculated based on the positions of the high-luminance areas 12a. The horizontal distance De may be calculated based on the positions of the left eye 15L and the right eye 15R. When the horizontal distance Dh is greater than twice the horizontal distance De, the interocular distance E1 of the user may be determined to be less than the reference distance E0. When the horizontal distance Dh is less than twice the horizontal distance De, the interocular distance E1 of the user may be determined to be greater than the reference distance E0.

The controller 7 controls the drive 11 based on the horizontal distance Dh and the horizontal distance De and causes the barrier 6 to move in the third direction.

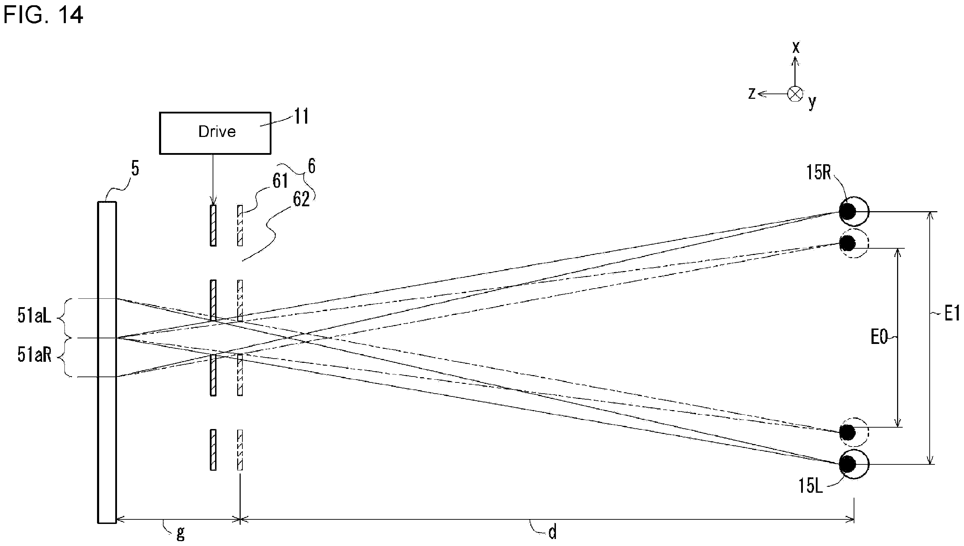

When determining that the interocular distance E1 of the user is greater than the reference distance E0, the controller 7 causes the barrier 6 to move in the third direction as illustrated in, for example, FIG. 14, and causes the distance between the barrier 6 and the active area 51 to decrease. This allows image light from the subpixels included in the left viewable sections 51aL to reach the left eye of the user with the interocular distance E1 greater than the reference distance E0 and image light from the subpixels included in the right viewable sections 51aR to reach the right eye of the user with the interocular distance E1 greater than the reference distance E0.

When determining that the interocular distance E1 of the user is less than the reference distance E0, the controller 7 causes the barrier 6 to move in the third direction and causes the distance between the barrier 6 and the active area 51 to increase. This allows image light from the subpixels included in the left viewable sections 51aL to reach the left eye 15L of the user with the interocular distance E1 less than the reference distance, and image light from the subpixels included in the right viewable sections 51aR to reach the right eye 15R of the user with the interocular distance E1 greater than the reference distance E0.

With interocular distance correction performed based on the image of the face of the user onto which the first reference image is projected, the 3D display device 1 can perform the correction without relying on the user's subjective determination. The 3D display device 1 thus allows the user to view a 3D image appropriately.

The memory 8 may store a table for interocular distance correction in which the relationship between the ratio of the horizontal distance Dh and the horizontal distance De and the amount of movement of the barrier 6 in the third direction is defined. The controller 7 may control the drive 11 using the table for interocular distance correction stored in the memory 8.

In correcting the interocular distance, the 3D display device 1 uses no determination by the user. The 3D display device 1 can thus repeat interocular distance correction multiple times without burdening the user and achieves more accurate interocular distance correction.

The 3D display device 1 may correct the second detection image 13 and correct the interocular distance based on the corrected second detection image 13. The second detection image 13 may be corrected based on the reflectance of the face of the user. Correction of the second detection image 13 and correction of the interocular distance using the corrected second detection image 13 will be described below.

The controller 7 causes the display panel 5 to display a test image before causing the display panel 5 to display the first reference image 14. The test image may be a monochrome image. The monochrome image may be a white image. The test image may be generated by, for example, combining a white first image and a white second image. The controller 7 may cause the display panel 5 to display the test image before or after generating the first reference image 14.

The controller 7 causes the detector 2 to capture an image of the face of the user onto which the test image is projected and obtains a measurement image. The controller 7 measures the reflectance of the face of the user based on the measurement image and detects the positions of the left eye 15L and the right eye 15R. The reflectance of the face of the user may be measured for each pixel in the measurement image based on the luminance value of the test image displayed on the display panel 5 and the luminance value of each pixel in the measurement image. The controller 7 may use the reflectance read from the memory 8 storing the reflectance measured when the index is adjusted, or may measure the reflectance again when correcting the interocular distance. The controller 7 calculates the horizontal distance De based on the positions of the left eye 15L and the right eye 15R.

The controller 7 causes the display panel 5 to display the first reference image 14. The controller 7 causes the detector 2 to capture an image of the face of the user onto which the first reference image 14 is projected and obtains the second detection image 13. The controller 7 corrects the second detection image 13 with the luminance value of each pixel in the second detection image 13 divided by the reflectance of the corresponding pixel measured from the measurement image. The controller 7 detects the positions of high-luminance areas 12a based on the corrected second detection image 13 and calculates a horizontal distance Dh based on the positions of the high-luminance areas 12a. A subsequent process is the same as or similar to the process in the interocular distance correction using the uncorrected second detection image 13 and will not be described in detail. The corrected second detection image 13 is less susceptible to the reflectance of the face of the user, and detection of the shading pattern is easier. Thus, using the corrected second detection image 13 allows accurate correction of the interocular distance.

When determining that the low-luminance area 13b in the shading pattern is difficult to identify, the controller 7 may use the distance between adjacent high-luminance areas 13a in the horizontal direction as the horizontal distance Dh. This allows correction of the interocular distance based on the image of the face of the user onto which the first reference image is projected when the low-luminance area 13b in the shading pattern is difficult to identify under, for example, external light.

When determining that the low-luminance area 13b in the shading pattern is difficult to identify, the controller 7 may generate a reference image that is a composite of the left-eye image being a white image and the right-eye image being a black image. The reference image that is a composite of the left-eye image being a white image and the right-eye image being a black image is also referred to as an inverted reference image. The controller 7 may correct the interocular distance based on an image of the face of the user viewing the inverted reference image captured by the detector 2. The controller 7 may correct the interocular distance based on the distance between adjacent high-luminance areas in the horizontal direction and the horizontal distance De. This allows correction of the interocular distance based on the image of the face of the user onto which the inverted reference image is projected when the low-luminance area 13b in the shading pattern is difficult to identify under, for example, external light.

The 3D display device 1 may correct the interocular distance at nighttime. The positions of the user's eyes 15 or the first reference image 14 projected onto the face of the user are then less likely to be undetectable under, for example, external light. Nighttime may be, for example, the time between sunset and sunrise. Nighttime may be any time with a dark surrounding environment.

The 3D display device 1 may recorrect the interocular distance after correcting the interocular distance as described above. To recorrect the interocular distance, the controller 7 combines the first image and the second image different from each other and generates a parallax image for interocular distance recorrection. The controller 7 causes the display panel to display the generated parallax image. The parallax image for interocular distance recorrection may be the first reference image, the second reference image, or an image different from the first reference image and the second reference image. Hereafter, the parallax image for interocular distance recorrection is the second reference image.

The second reference image displayed on the display panel 5 reaches the user's left eye and right eye through the barrier 6 and, for example, an optical element. The second reference image is projected onto the face of the user. The controller 7 controls the detector 2 to capture an image of the face of the user onto which the second reference image is projected. The image of the face of the user captured by the detector 2 onto which the second reference image is projected is the same as or similar to the second detection image 13 illustrated in FIG. 13. However, the positions of the user's eyes 15 and the position of the shading pattern may differ from the second detection image 13 illustrated in FIG. 13. The process performed by the 3D display device 1 to recorrect the interocular distance is the same as or similar to the above process performed to correct the interocular distance, and will not be described in detail.

The 3D display device 1 recorrects the interocular distance and achieves more accurate correction of the interocular distance. The 3D display device 1 thus allows the user to view a 3D image appropriately. The 3D display device 1 can thus repeat interocular distance correction multiple times and achieves more accurate correction of the interocular distance.

The 3D display device 1 may display the reference image simply in interocular distance correction. In no interocular distance correction, the 3D display device 1 may display various items of information about the movable body, such as a vehicle, a vessel, or an aircraft, on which the 3D display device 1 is mounted. The 3D display device 1 may cause the reference image to be displayed between the frames of consecutive images indicating the various items of information, and may cause the detector 2 to capture an image of the face of the user onto which the reference image is projected. Thus, the 3D display device 1 can repeat interocular distance correction while displaying various items of information about the movable body. This allows the 3D display device 1 to constantly display a 3D image corresponding to the interocular distance of the user. The user can view a 3D image appropriately.

In the 3D display device 1, the detector 2 detects the positions of the eyes 15 and the position of the shading pattern. However, the detector 2 may not detect the positions of the eyes 15 and the position of the shading pattern. In this case, the 3D display device 1 may include the controller 7 that detects the positions of the eyes 15 and the position of the shading pattern, or the 3D display device 1 may include the position obtainer 3 that detects the positions of the eyes 15 and the position of the shading pattern and outputs the positions to the controller 7.

To recorrect the interocular distance, the 3D display device 1 may correct the image of the face of the user captured by the detector 2 onto which the second reference image is projected by using the reflectance of the face of the user, and may recorrect the interocular distance based on the corrected image.

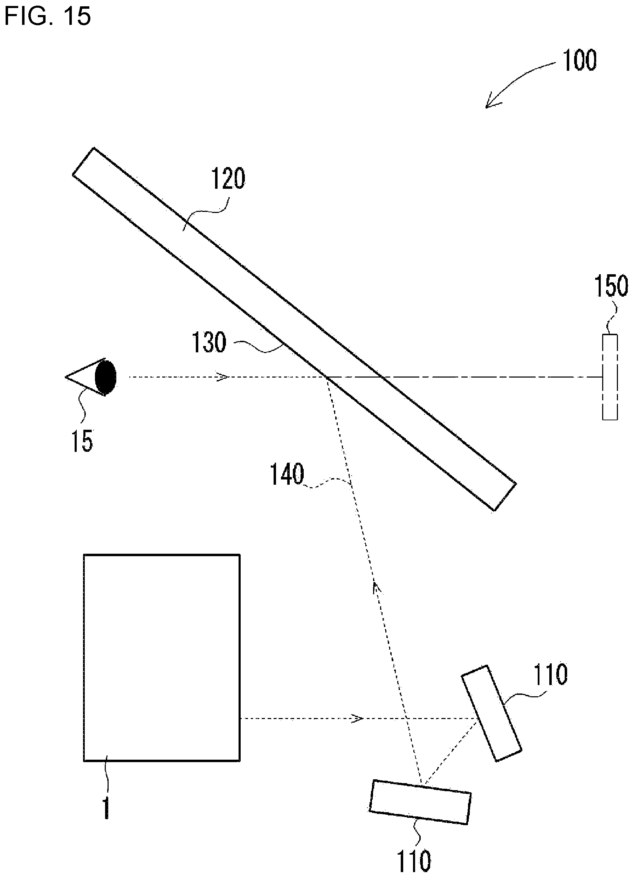

As illustrated in FIG. 15, the 3D display device 1 may be included in a head-up display 100. The head-up display 100 may also be referred to as a HUD 100. The HUD 100 includes the 3D display device 1, an optical member 110, and a projection reception member 120 including a projection screen 130.

The HUD 100 directs image light from the 3D display device 1 to reach the projection reception member 120 through the optical member 110. The HUD 100 directs image light reflected from the projection reception member 120 to reach the first eye and the second eye of the user. In other words, the HUD 100 directs the image light to travel from the 3D display device 1 to the user's first and second eyes along an optical path 140 indicated by a broken line in FIG. 15. The user can thus view image light reaching the eyes along the optical path 140 as a virtual image 150.

With index adjustment in the 3D display device 1 performed based on the image of the face of the user onto which the first reference image is projected, the HUD 100 can perform adjustment without relying on the user's subjective determination. The HUD 100 can thus allow the user to view a 3D image appropriately. In adjusting the index, the HUD 100 uses no determination by the user. The HUD 100 can thus repeat index adjustment multiple times without burdening the user and achieves more accurate index adjustment.

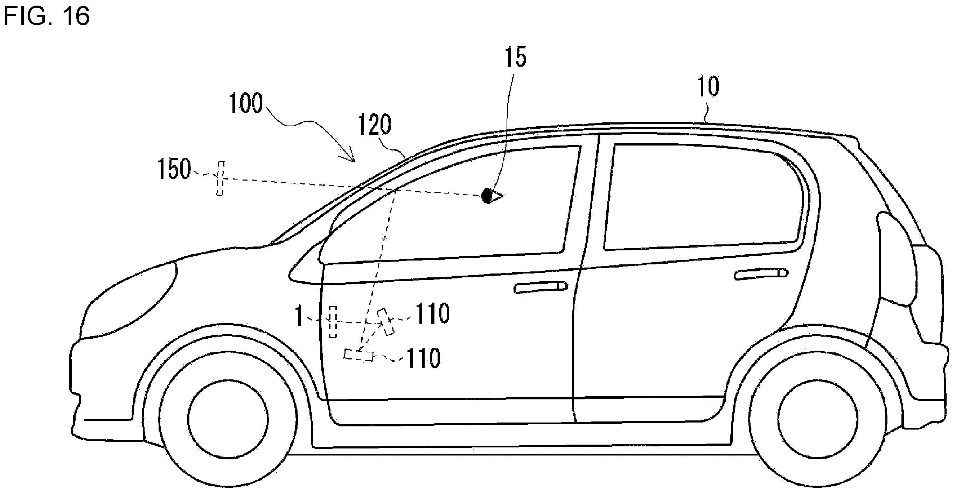

As illustrated in FIG. 16, the HUD 100 including the 3D display device 1 may be mounted on a movable body 10, such as a vehicle, a vessel, or an aircraft. The HUD 100 may include components that also serve as other devices or components included in the movable body 10. For example, the movable body 10 may use a windshield as the projection reception member 120. The devices or components of the movable body 10 serving as devices or components included in the HUD 100 may be referred to as HUD modules or 3D display components. The HUD 100 may be mounted on the movable body 10.

With index adjustment in the 3D display device 1 performed based on the image of the face of the user onto which the first reference image is projected, the movable body 10 can perform adjustment without relying on the user's subjective determination. The movable body 10 can thus allow the user to view a 3D image appropriately. In adjusting the index, the movable body 10 uses no determination by the user. The movable body 10 can thus repeat index adjustment multiple times without burdening the user and achieves more accurate index adjustment.

The vehicle according to one or more embodiments of the present disclosure includes, but is not limited to, an automobile or an industrial vehicle, and may also include a railroad vehicle, a community vehicle, or a fixed-wing aircraft traveling on a runway. The automobile includes, but is not limited to, a passenger vehicle, a truck, a bus, a motorcycle, or a trolley bus, and may also include another vehicle traveling on a road. The industrial vehicle includes an industrial vehicle for agriculture and an industrial vehicle for construction. The industrial vehicle includes, but is not limited to, a forklift or a golf cart. The industrial vehicle for agriculture includes, but is not limited to, a tractor, a cultivator, a transplanter, a binder, a combine, and a lawn mower. The industrial vehicle for construction includes, but is not limited to, a bulldozer, a scraper, a power shovel, a crane vehicle, a dump truck, or a road roller. The vehicle includes a man-powered vehicle. The classification of the vehicle is not limited to the above. For example, the automobile may include an industrial vehicle traveling on a road, and one type of vehicle may fall within a plurality of classes. The vessel according to one or more embodiments of the present disclosure includes a jet ski, a boat, or a tanker. The aircraft according to one or more embodiments of the present disclosure includes a fixed-wing aircraft or a rotary-wing aircraft.

Although embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

In the present disclosure, the first, the second, or others are identifiers for distinguishing the components. The identifiers of the components distinguished with the first, the second, and others in the present disclosure are interchangeable. For example, the first eye can be interchangeable with the second eye. The identifiers are to be interchanged together. The components for which the identifiers are interchanged are also to be distinguished from one another. The identifiers may be eliminated. The components without such identifiers can be distinguished with reference numerals. The identifiers such as the first and the second in the present disclosure alone should not be used to determine the order of components or to suggest the existence of smaller number identifiers.

In the present disclosure, x-axis, y-axis, and z-axis are used for ease of explanation and may be interchangeable with one another. The orthogonal coordinate system including x-axis, y-axis, and z-axis is used to describe the structures according to the present disclosure. The positional relationship between the components in the present disclosure is not limited to being orthogonal.

The present disclosure may be implemented in the following forms.

In one embodiment of the present disclosure, a three-dimensional display device includes a display panel, a barrier, a detector, and a controller. The display panel displays a parallax image including a first image and a second image having parallax with respect to the first image. The barrier defines a traveling direction of image light of the parallax image to generate parallax between a first eye and a second eye of a user. The detector captures an image of a face of the user viewing the parallax image. The controller generates a first reference image by combining the first image and the second image different from each other based on an index defining an arrangement of the first image and the second image to be displayed on the display panel, and causes the display panel to display the first reference image. The controller adjusts the index based on the image of the face of the user captured by the detector onto which the reference image is projected.

In one embodiment of the present disclosure, a head-up display includes a display panel, a barrier, an optical member, a detector, and a controller. The display panel displays a parallax image including a first image and a second image having parallax with respect to the first image. The barrier defines a traveling direction of image light of the parallax image to generate parallax between a first eye and a second eye of a user. The optical member allows the image light emitted from the display panel to be viewable to the user as a virtual image. The detector captures an image of a face of the user viewing the parallax image. The controller generates a first reference image by combining the first image and the second image different from each other based on an index defining an arrangement of the first image and the second image to be displayed on the display panel, and causes the display panel to display the first reference image. The controller adjusts the index based on the image of the face of the user captured by the detector onto which the reference image is projected.

In one embodiment of the present disclosure, a movable body includes a head-up display. The head-up display includes a display panel, a barrier, an optical member, a detector, and a controller. The display panel displays a parallax image including a first image and a second image having parallax with respect to the first image. The barrier defines a traveling direction of image light of the parallax image to generate parallax between a first eye and a second eye of a user. The optical member allows the image light emitted from the display panel to be viewable to the user as a virtual image. The detector captures an image of a face of the user viewing the parallax image. The controller generates a first reference image by combining the first image and the second image different from each other based on an index defining an arrangement of the first image and the second image to be displayed on the display panel, and causes the display panel to display the first reference image. The controller adjusts the index based on the image of the face of the user captured by the detector onto which the reference image is projected.

The 3D display device, the head-up display, and the movable body according to an embodiment of the present disclosure can allow the user to view a 3D image appropriately.

Although embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

REFERENCE SIGNS

1 three-dimensional (3D) display device
2 detector
3 position obtainer
4 illuminator
5 display panel
51 active area
51a viewable section
51 aL left viewable section
51aR right viewable section
51bL left unviewable section
5 1bR right unviewable section
51aLR binocular viewable section
6 barrier
61 light-blocking portion
62 transmissive portion
7 controller
8 memory
10 movable body
11 drive
12 first detection image

13 second detection image
12a, 13 a high-luminance area
12b, 13b low-luminance area
14 reference image (first reference image)
15 eye
15L left eye
15Rright eye
100 head-up display (HUD)
110 optical member
120 projection reception member
130 projection screen
140 optical path
150 virtual image

**Claims**

1. A three-dimensional display device, comprising:

   a display panel configured to display a parallax image including a first image and a second image having parallax with respect to the first image;
   a barrier configured to define a traveling direction of image light of the parallax image to generate parallax between a first eye and a second eye of a user;
   a detector configured to capture an image of a face of the user viewing the parallax image; and
   a controller,
   wherein the controller generates a first reference image by combining the first image and the second image different from each other based on an index defining an arrangement of the first image and the second image to be displayed on the display panel,
   the controller causes the display panel to display the first reference image to be projected onto the user, and
   the controller adjusts the index based on the image of the face of the user captured by the detector.

2. The three-dimensional display device according to claim 1, wherein
   the controller adjusts a position of the barrier in the traveling direction of the image light based on the image of the face of the user onto which the first reference image is projected.

3. The three-dimensional display device according to claim 1 or claim 2, wherein

   the first image and the second image are monochrome images different from each other, and
   the controller adjusts the index based on at least one of a position of the first eye or a position of the second eye of the user and a shading pattern of the first reference image projected onto the face of the user obtained from the image of the face of the user captured by the detector.

4. The three-dimensional display device according to claim 3, wherein
   the controller adjusts a position of the barrier in the traveling direction of the image light based on the positions of the first eye and the second eye of the user and the shading pattern of the first reference image projected onto the face of the user obtained from the image of the face of the user captured by the detector.

5. The three-dimensional display device according to any one of claims 1 to 4, wherein

   the controller generates a second reference image by combining the first image and the second image different from each other based on the adjusted index,
   the controller causes the display panel to display the second reference image, and
   the controller readjusts the index based on the image of the face of the user captured by the detector onto which the second reference image is projected.

6. The three-dimensional display device according to claim 5, wherein
   the controller readjusts the position of the barrier in the traveling direction of the image light based on the image of the face of the user onto which the second reference image is projected.

7. The three-dimensional display device according to any one of claims 1 to 6, wherein
   the controller causes the display panel to display a monochrome test image before causing the display panel to display the first reference image.

8. The three-dimensional display device according to claim 7, wherein
   the monochrome test image is a white monochrome image.

9. The three-dimensional display device according to claim 7 or claim 8, wherein
   the controller causes the detector to capture an image of the face of the user onto which the monochrome test image is projected.

10. The three-dimensional display device according to claim 9, wherein
    the controller measures a reflectance of the face of the user based on the image of the face of the user captured by the detector onto which the monochrome test image is projected.

**11.** The three-dimensional display device according to claim 10, wherein
the controller corrects, based on the reflectance, the image of the face of the user captured by the detector onto which the first reference image is projected.

**12.** The three-dimensional display device according to claim 11, wherein
the controller adjusts the index based on the corrected image of the face of the user.

**13.** A head-up display, comprising:

a display panel configured to display a parallax image including a first image and a second image having parallax with respect to the first image;

a barrier configured to define a traveling direction of image light of the parallax image to generate parallax between a first eye and a second eye of a user;

an optical member configured to allow the image light emitted from the display panel to be viewable to the user as a virtual image;

a detector configured to capture an image of a face of the user viewing the parallax image; and

a controller,

wherein the controller generates a first reference image by combining the first image and the second image different from each other based on an index specifying an arrangement of the first image and the second image to be displayed on the display panel,

the controller causes the display panel to display the first reference image, and

the controller adjusts the index based on the image of the face of the user captured by the detector onto which the first reference image is projected.

**14.** A movable body, comprising:

a head-up display including

a display panel configured to display a parallax image including a first image and a second image having parallax with respect to the first image,

a barrier configured to define a traveling direction of image light of the parallax image to generate parallax between a first eye and a second eye of a user,

an optical member configured to allow the image light emitted from the display panel to be viewable to the user as a virtual image,

a detector configured to capture an image of a face of the user viewing the parallax image, and

a controller,

wherein the controller generates a first reference image by combining the first image and the second image different from each other based on an index specifying an arrangement of the first image and the second image to be displayed on the display panel,

the controller causes the display panel to display the first reference image, and

the controller adjusts the index based on the image of the face of the user captured by the detector onto which the first reference image is projected.

FIG. 1

EP 4 187 310 A1

FIG. 2

FIG. 3

EP 4 187 310 A1

FIG. 4

EP 4 187 310 A1

**FIG. 5**

| P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R | P11 R | P12 R |
|---|---|---|---|---|---|---|---|---|---|---|---|---|---|---|---|---|---|---|---|---|---|---|---|
| P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R | P11 R |
| P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R |
| P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R |
| P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R |
| P2 L | P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R |
| P1 L | P2 L | P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L |

51aR (51bL)　　　51bR (51aL)　　　51aR (51bL)　　　51bR (51aL)

FIG. 6

| Right eye | 0 | 1 | 2 | 3 | 4 | 5 | 6 | 7 | 8 | 9 | 10 | 11 |
|---|---|---|---|---|---|---|---|---|---|---|---|---|
| Left eye | 6 | 7 | 8 | 9 | 10 | 11 | 0 | 1 | 2 | 3 | 4 | 5 |

15R

15L

15

EP 4 187 310 A1

FIG. 7

| | P1 | P2 | P3 | P4 | P5 | P6 | P7 | P8 | P9 | P10 | P11 | P12 |
|---|---|---|---|---|---|---|---|---|---|---|---|---|
| 0 | Left | Left | Left | Left | Left | Left | Right | Right | Right | Right | Right | Right |
| 1 | Right | Left | Left | Left | Left | Left | Left | Right | Right | Right | Right | Right |
| 2 | Right | Right | Left | Left | Left | Left | Left | Left | Right | Right | Right | Right |
| 3 | Right | Right | Right | Left | Left | Left | Left | Left | Left | Right | Right | Right |
| 4 | Right | Right | Right | Right | Left | Left | Left | Left | Left | Left | Right | Right |
| 5 | Right | Right | Right | Right | Right | Left | Left | Left | Left | Left | Left | Right |
| 6 | Right | Right | Right | Right | Right | Right | Left | Left | Left | Left | Left | Left |
| 7 | Left | Right | Right | Right | Right | Right | Right | Left | Left | Left | Left | Left |
| 8 | Left | Left | Right | Right | Right | Right | Right | Right | Left | Left | Left | Left |
| 9 | Left | Left | Left | Right | Right | Right | Right | Right | Right | Left | Left | Left |
| 10 | Left | Left | Left | Left | Right | Right | Right | Right | Right | Right | Left | Left |
| 11 | Left | Left | Left | Left | Left | Right | Right | Right | Right | Right | Right | Left |

EP 4 187 310 A1

FIG. 8

FIG. 9

FIG. 10

# FIG. 11

Start

| Display test image and obtain measurement image | S1 |

| Measure reflectance of user's face based on measurement image | S3 |

| Detect position of right eye based on measurement image | S2 |

| Display first reference image and obtain first detection image | S4 |

| Correct first detection image using reflectance of user's face | S5 |

| Detect position of high-luminance area based on corrected first detection image | S6 |

| Correct origin | S7 |

| Adjust index | S8 |

End

FIG. 12

FIG. 13

FIG. 14

EP 4 187 310 A1

FIG. 15

FIG. 16

EP 4 187 310 A1

| INTERNATIONAL SEARCH REPORT | International application No. |
| | PCT/JP2021/026664 |

A. CLASSIFICATION OF SUBJECT MATTER
Int.Cl. G02B30/30(2020.01)i, G02B27/01(2006.01)i
FI: G02B30/30, G02B27/01

According to International Patent Classification (IPC) or to both national classification and IPC

B. FIELDS SEARCHED

Minimum documentation searched (classification system followed by classification symbols)
Int.Cl. G02B27/00-30/60, H04N13/00-17/06, G03B35/00-37/06

Documentation searched other than minimum documentation to the extent that such documents are included in the fields searched
Published examined utility model applications of Japan    1922-1996
Published unexamined utility model applications of Japan  1971-2021
Registered utility model specifications of Japan          1996-2021
Published registered utility model applications of Japan  1994-2021

Electronic data base consulted during the international search (name of data base and, where practicable, search terms used)
Japio-GPG/FX

C. DOCUMENTS CONSIDERED TO BE RELEVANT

| Category* | Citation of document, with indication, where appropriate, of the relevant passages | Relevant to claim No. |
|---|---|---|
| X | JP 2020-77913 A (KYOCERA CORPORATION) 21 May 2020 (2020-05-21), paragraphs [0017]-[0065], [0107], [0108], fig. 1-3, 6-8 | 1, 3, 5, 13, 14 |
| A | JP 9-281438 A (TOSHIBA CORPORATION) 31 October 1997 (1997-10-31), paragraphs [0001], [0092]-[0110] | 1-14 |
| A | WO 2020/090712 A1 (KYOCERA CORPORATION) 07 May 2020 (2020-05-07), paragraphs [0048]-[0053] | 1-14 |
| A | US 2013/0307948 A1 (SAMSUNG DISPLAY CO., LTD.) 21 November 2013 (2013-11-21), entire text, fig. 2 | 1-14 |
| A | JP 2000-287224 A (SANYO ELECTRIC CO., LTD.) 13 October 2000 (2000-10-13), entire text, fig. 1, 3, 5 | 1-14 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| 19 August 2021 | 07 September 2021 |

| Name and mailing address of the ISA/ | Authorized officer |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| International application No. |
| --- |
| PCT/JP2021/026664 |

| | | | |
| --- | --- | --- | --- |
| JP 2020-77913 A | 21 May 2020 | WO 2020/095801 A1 CN 112970248 A | |
| JP 9-281438 A | 31 October 1997 | (Family: none) | |
| WO 2020/090712 A1 | 07 May 2020 | CN 112889274 A | |
| US 2013/0307948 A1 | 21 November 2013 | KR 10-2013-0128253 A | |
| JP 2000-287224 A | 13 October 2000 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001166259 A